(19)

Europäisches
Patentamt
European
Patent Office
Office européen
des brevets

(11) **EP 1 852 965 A1**

(12) **EUROPEAN PATENT APPLICATION**

(43) Date of publication:
**07.11.2007 Bulletin 2007/45**

(51) Int Cl.:
*H02P 6/16* (2006.01)   *H02P 25/02* (2006.01)
*H02P 25/08* (2006.01)   *H02M 5/458* (2006.01)

(21) Application number: **07107327.4**

(22) Date of filing: **02.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **04.05.2006 KR 20060040688**

(71) Applicant: **LG Electronics Inc.**
**Seoul 150-721 (KR)**
Designated Contracting States:
**DE GB IT**

(72) Inventors:
• **Won, June-Hee**
  **Nowon-gu, Seoul, Korea (KR)**
• **Cheong, Dal-Ho**
  **Seoul, Korea (KR)**
• **Oh, Jae-Yoon**
  **Gyeonggi-Do, Korea (KR)**

(74) Representative: **Vossius & Partner**
**Siebertstrasse 4**
**81675 München (DE)**

(54) **Apparatus and method of controlling synchronous reluctance motor**

(57)     An apparatus for driving a motor includes a rectifier which rectifies input alternating current (AC) power, a power converter which converts the rectified AC power into direct current (DC) power, an inverter which converts the DC power into AC power of a predetermined frequency that drives the motor, a position detector which detects a position of a rotor of the motor with respect to a stator of the motor by detecting a magnetic flux emanating from the rotor, and a controller which controls the inverter to control the driving of the motor according to the detected position of the rotor.

FIG. 2

EP 1 852 965 A1

**Description**

The present invention relates to an apparatus and method of controlling a synchronous reluctance motor, and particularly to an apparatus and method of controlling a synchronous reluctance motor using a control integrated circuit (IC) and a hall sensor.

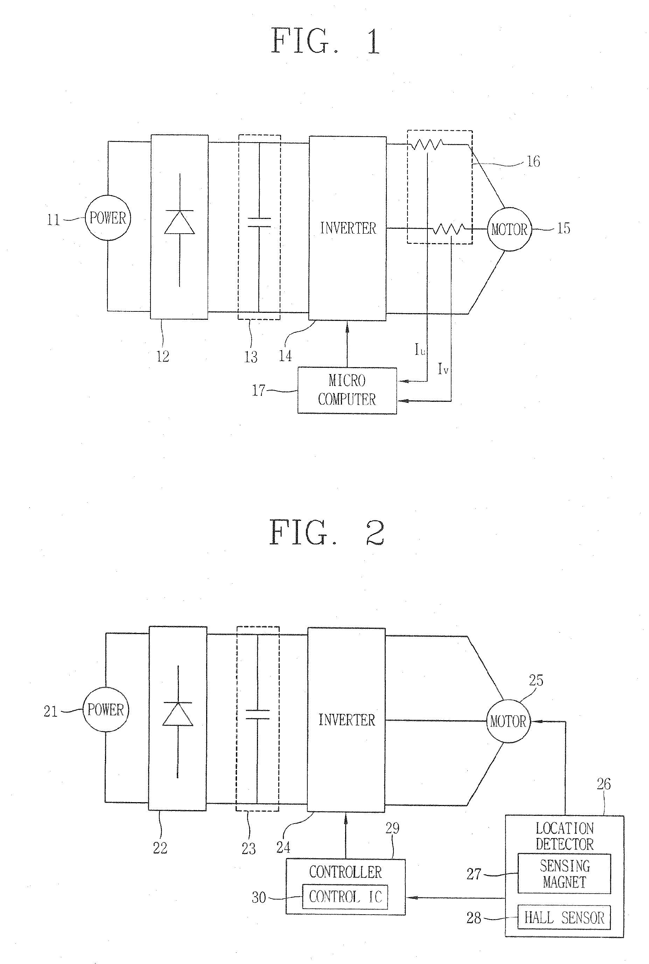

FIG. 1 is a block diagram showing a configuration of a conventional apparatus for driving a synchronous reluctance motor. The conventional apparatus shown in FIG. 1 includes an alternating current (AC) power unit 11 which outputs AC power, a rectifier 12 which converts the AC power into a direct current (DC) power, a DC-DC converter 13 which increases or decreases the DC power outputted by the rectifier 12, and an inverter 14 which converts the DC power outputted by the DC-DC converter 13 into an AC power that drives a synchronous reluctance motor 15. The apparatus also includes a current sensor 16 which measures a current of the motor 15, and a microcomputer 17 which receives the current measurements from the current sensor 16, estimates a position of a rotor of the motor 15 based on the current measurements, and controls a speed of the motor 15 based on the estimated position of the rotor by outputting a pulse width modulation (PWM) signal to the inverter 14 which controls the AC power outputted by the inverter 14. The microcomputer 17 stores a software program which allows it to estimate the position of the rotor from the current measurements.

One of the disadvantages of the conventional driving apparatus shown in FIG. 1 are that the current sensor 16 and microcomputer 17 are relatively expensive. Additionally, if the configuration of the motor is changed, a complicated control algorithm of the software program of the microcomputer 17 must be corrected. Further, a separate emulator is required to load a control algorithm on the microcomputer 17.

The object of the present invention is to provide an economical control apparatus for controlling a synchronous reluctance motor.

To achieve at least this feature, there is provided an apparatus for driving a motor which includes a rectifier which rectifies input AC power, a power converter which converts the rectified AC power into DC power, an inverter which converts the DC power into AC power of a predetermined frequency that drives the motor, a position detector which detects a position of a rotor of the motor with respect to a stator of the motor by detecting a magnetic flux emanating from the rotor, and a controller which controls the inverter to control the driving of the motor according to the detected position of the rotor.

The position detector may include a sensing magnet, placed on a shaft on the rotor, which generates the magnetic flux, and at least one hall sensor which detects the generated flux to measure a relative location of the sensing magnet.

The sensing magnet may be fixed on the shaft such that its location is fixed with respect to the rotor. The at least one hall sensor may include a plurality of hall sensors placed at 120° intervals around the stator. The at least one hall sensor may output one of a high and a low signal, depending on whether it senses a magnetic flux from one of an N pole and an S pole of the sensing magnet.

The controller may control the inverter based on a detected position of a D-axis of the rotor. The controller may include a control integrated circuit (IC) which outputs a voltage based on a signal output by the position detector. The controller may output a 120 degree, 2-phase pulse width modulation (PWM) voltage to start the motor.

The at least one hall sensor may be placed at a center of a coil axis of the stator, and a center of a magnetic flux vector emanating from the sensing magnet may be aligned with a D-axis of the rotor. A torque of the motor may be at a maximum value when an angle between a D-axis of the rotor and a current vector of the motor is approximately 45 degrees. The motor may be a permanent magnet assisted synchronous reluctance motor.

There is also provided a method of driving a motor which includes rectifying input AC power, converting the rectified AC power into DC power, converting the DC power into AC power of a predetermined frequency, detecting a position of a rotor of the motor with respect to a stator of the motor by detecting a magnetic flux emanating from the rotor, and controlling an inverter to drive the motor according to the detected position of the rotor.

The inverter may be controlled based on a detected position of a D-axis of the rotor. A hall sensor may be placed at a center of a coil axis of the stator, and a center of a magnetic flux vector emanating from the sensing magnet may be aligned with the D-axis of the rotor.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a block diagram showing a configuration of a conventional apparatus for driving a synchronous reluctance motor;

FIG. 2 is a block diagram showing a configuration of an apparatus of controlling a synchronous reluctance motor according to an embodiment of the present invention;

FIG. 3 is a block diagram showing a configuration of a rotor, a hall sensor, a sensing magnet, and a controller according to an embodiment of the present invention;

FIG. 4 illustrates a flux vector diagram illustrating flux vectors of a permanent magnet assisted synchronous reluctance motor according to an embodiment of the present invention;

FIG. 5 is a cross-sectional view of a rotor, a shaft and a sensing magnet of FIG. 3;

FIG. 6 is a cross-sectional view of a rotor according to an embodiment of the present invention; and

FIG. 7 is a flow chart of a method of controlling a synchronous reluctance motor according to an embodiment of the present invention.

FIG. 2 illustrates an embodiment of an apparatus for controlling a synchronous reluctance motor according to the present invention. The apparatus shown in FIG.. 2 includes an alternating current (AC) power unit 21 which outputs AC power, a rectifier 22 which converts AC power outputted from the AC power unit 21 into DC power, a DC-DC converter 23 which increases or decreases the DC power outputted by the rectifier 22, and an inverter 24 which converts the DC power outputted by the DC-DC converter 23 into an AC power of a predetermined frequency that drives a synchronous reluctance motor 25. The apparatus also includes a position detector 26 which detects a position of a rotor of the motor 25, and a controller 29 which drives the motor 25 by controlling the output of the inverter 24 based on the detected position of the rotor. The position detector 26 includes a sensing magnet 27 disposed on a shaft of the rotor, and a hall sensor 28 which measures a location of the sensing magnet 27 by detecting a flux.

An embodiment of the present invention will now be described in further detail. The position of the sensing magnet 27 with respect to the hall sensor 28, and thus the position of the rotor with respect to the stator, can be determined based on a correlation between a voltage and a flux, a correlation between a voltage and a current, and a correlation between a current and a D-axis of the rotor, as defined by Equations 1 and 2 below:

$$\oint \vec{E} \cdot d\vec{l} = -\frac{d\Phi}{dt}$$

--------------(Equation 1)

$$T = \frac{3}{2} \cdot \frac{P}{2} \cdot (L_d - L_q) \cdot i_s^2 \cdot \frac{\sin 2\theta_i}{2}$$

--------------(Equation 2)

where E denotes a voltage, $\Phi$ denotes a flux, T denotes a torque, P denotes the number of poles, $L_d$ and $L_q$ denotes synchronous d-axis and q-axis inductances, respectively, $I_s$, denotes a current, and $\theta_i$ denotes a current angle between the D-axis of the rotor and a current.

The controller 29 may be implemented with an relatively inexpensive control IC 30, and does not require a complicated current detection process or a complicated current detecting sensor.

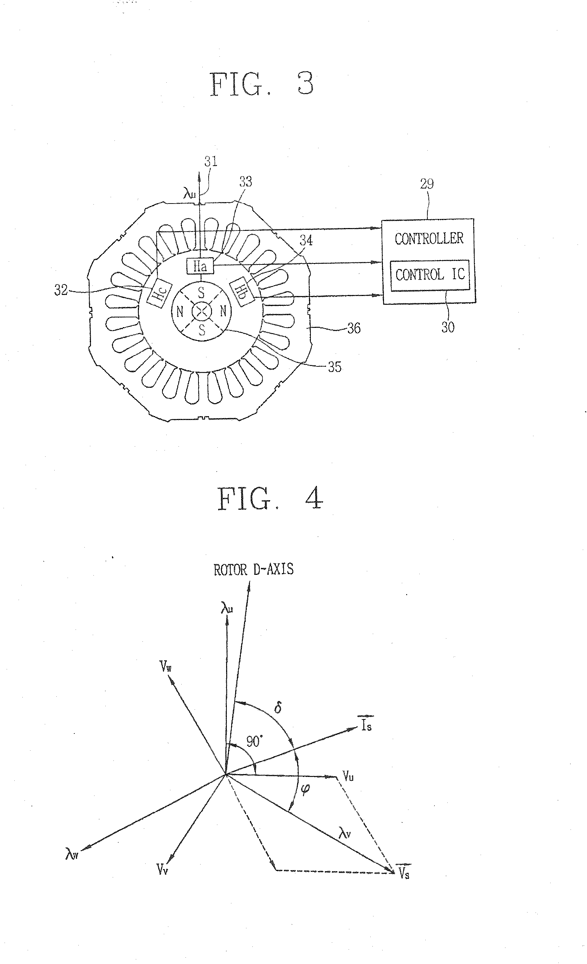

FIG. 3 is a block diagram showing a configuration of the rotor, the hall sensor, the sensing magnet and the controller according to an embodiment of the present invention, and FIG. 4 is a flux vector diagram illustrating flux vectors of a permanent magnet assisted synchronous reluctance motor according to an embodiment of the present invention.

The controller 29 outputs a 120 degree, 2-phase PWM voltage to the inverter 24 to start the motor 25. As illustrated in FIG. 3, a plurality of hall sensors Ha 33, Hb 34 and Hc 32 are fixed to a stator 36 of the motor 25, and a sensing magnet 35 is fixed to a rotor of the motor 25. When the motor 25 is started, the hall sensor Ha 33 is aligned with an S pole of the sensing magnet 35, the hall sensors Hb 34 and Hc 32 are aligned with N poles of the sensing magnet 35, and two phase voltages Vu+ and Vw- of a 3-phase voltage are applied to the motor 25.

A combined voltage vector Vs, which is the sum of the Vu and Vw voltage vectors, is shown in FIG. 4. As shown in FIG. 4, and expressed by Equation 1, the voltage vectors $V_U$, $V_V$, $V_W$ differ in phase from the flux vectors $\lambda_U$, $\lambda_V$, $\lambda_W$ by 90 degrees. Since a power factor is relatively great at a low velocity, a phase difference $\varphi$ between the combined voltage vector Vs and a corresponding current vector $I_S$ is approximately 35 to 45 degrees.

As expressed in Equation 2, the torque of the synchronous reluctance motor is at a maximum value when the current angle $\theta_i$ between the D-axis of the rotor and the current vector $I_S$ is 45°.

The control IC 30 outputs a voltage based on a signal outputted by one or more hall sensors. The voltage vector applied to the motor remains constant until the D-axis of the rotor completes a substantially 60 degree rotation.

If the D-axis were to lag the current vector Is by 45 degrees in the rotation direction of the voltage vector, and the rotor then rotates by 60 degrees, the current angle ($\theta_i$) would become approximately -15°, and thus a negative torque would be generated. Thus, to prevent a negative torque from being generated, the D-axis of the rotor may be set at about 75 degrees from the current vector Is.

When the rotor D-axis is placed at an angle ranging from approximately 110 to approximately 120 degrees from the combined voltage vector (Vs) in the opposite direction to the rotation direction, the synchronous reluctance motor can be stably started-up and driven.

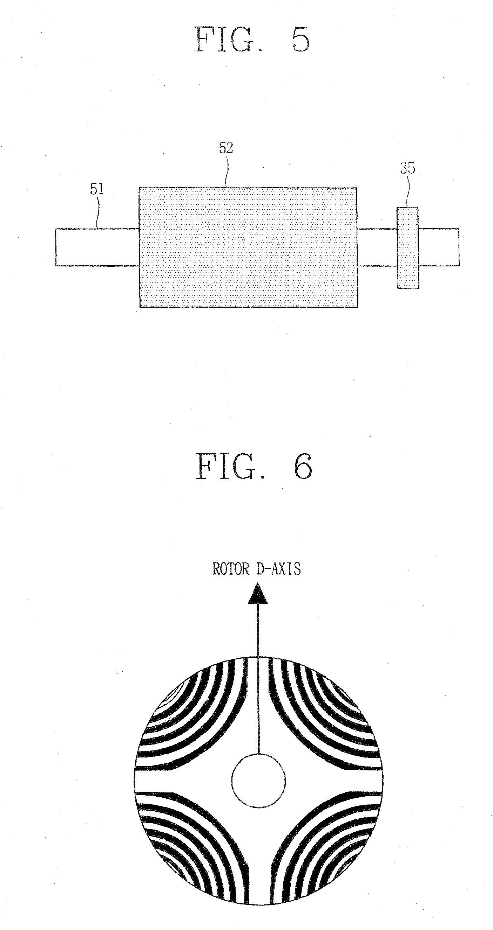

FIG. 5 is a cross-sectional view of a rotor, a shaft, and a sensing magnet. As shown in FIG. 3, a U-phase coil axis 31 corresponds to a center of a U-phase winding, which is one of three-phases of the stator 36. As shown in FIG. 5, the sensing magnet 35 is affixed to a shaft 51 so that its location is physically fixed relative to a rotor 52.

The hall sensors Ha 33, Hb 34 and Hc 32 are physically placed at 120 degree intervals around the stator 36, and output a High or a Low signal, depending on whether they sense a flux from an N pole or an S pole of the sensing magnet 35.

FIG. 6 is a cross-sectional view of a rotor according to an embodiment of the present invention, illustrating a D-axis of the rotor.

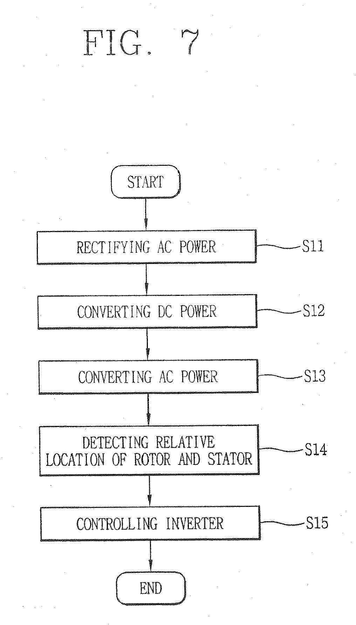

FIG. 7 shows a flowchart of a method of controlling driving of a synchronous reluctance motor according to an embodiment of the present invention. The method includes rectifying an AC power input (S11), converting the rectified AC power into DC power (S12), converting the DC power into AC power of a predetermined frequency (S13), detecting relative locations of a rotor and a stator based on a voltage and a flux (S 14); and controlling an inverter in order to control the driving of the motor according to the detected relative locations (S 15).

Here, the controlling of the inverter (S 15) includes controlling the position of the rotor relative to the stator based on the detection of the poles of the sensing magnet by the hall sensors.

To control the inverter, the hall sensor is placed at the center of the coil axis of the stator, and the center of the magnetic flux vector emanating from the sensing magnet is aligned with the D-axis of the rotor.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

**Claims**

1. An apparatus for driving a motor, comprising:

    a rectifier which rectifies input alternating current (AC) power;
    a power converter which converts the rectified AC power into direct current (DC) power;
    an inverter which converts the DC power into AC power of a predetermined frequency to drive the motor;
    a position detector which detects a position of a rotor of the motor with respect to a stator of the motor by detecting a magnetic flux emanating from the rotor; and
    a controller which controls the inverter to control the driving of the motor according to the detected position of the rotor.

2. The apparatus of claim 1, wherein the position detector comprises:

    a sensing magnet, placed on a shaft on the rotor, which generates the magnetic flux; and
    at least one hall sensor which detects the generated flux to measure a relative location of the sensing magnet.

3. The apparatus of claim 2, wherein the sensing magnet is fixed on the shaft such that its location is fixed with respect to the rotor.

4. The apparatus of claim 2 or 3, wherein the at least one hall sensor comprises a plurality of hall sensors placed at 120° intervals around the stator.

5. The apparatus of claim 2, 3, or 4, wherein the at least one hall sensor outputs one of a high and a low signal, depending on whether it senses a magnetic flux from one of an N pole and an S pole of the sensing magnet.

6. The apparatus of any of claims 2 to 5, wherein the at least one hall sensor is placed at a center of a coil axis of the stator, and a center of a magnetic flux vector emanating from the sensing magnet is aligned with a D-axis of the rotor.

**7.** The apparatus of any of claims 1 to 6, wherein the controller controls the inverter based on a detected position of a D-axis of the rotor

**8.** The apparatus of any of claims 1 to 7, wherein the controller comprises a control integrated circuit (IC) which outputs a voltage based on a signal output by the position detector.

**9.** The apparatus of any of claims 1 to 8, wherein the controller outputs a 120 degree, 2-phase pulse width modulation (PWM) voltage to start the motor.

**10.** The apparatus of any of claims 1 to 9, wherein a torque of the motor is at a maximum value when an angle between a D-axis of the rotor and a current vector of the motor is approximately 45 degrees.

**11.** The apparatus of any of claims 1 to 10, wherein the motor is a permanent magnet assisted synchronous reluctance motor.

**12.** A method of driving a motor, comprising:

rectifying input alternating current (AC) power;
converting the rectified AC power into direct current (DC) power;
converting the DC power into AC power of a predetermined frequency;
detecting a position of a rotor of the motor with respect to a stator of the motor by detecting a magnetic flux emanating from the rotor; and
controlling an inverter to drive the motor according to the detected position of the rotor.

**13.** The method of claim 12, wherein the inverter is controlled based on a detected position of a D-axis of the rotor.

**14.** The method of claim 12 or 13, wherein a hall sensor is placed at a center of a coil axis of the stator, and a center of a magnetic flux vector emanating from the sensing magnet is aligned with a D-axis of the rotor.

# FIG. 1

POWER 11

12

13

14

INVERTER

16

MOTOR 15

$I_u$

$I_v$

17 MICRO COMPUTER

# FIG. 2

POWER 21

22

23

24

INVERTER

25 MOTOR

26 LOCATION DETECTOR

27 SENSING MAGNET

28 HALL SENSOR

29 CONTROLLER

30 CONTROL IC

# FIG. 3

# FIG. 4

# FIG. 5

# FIG. 6

ROTOR D-AXIS

# FIG. 7

```
        ┌─────────┐
        │  START  │
        └────┬────┘
             │
             ▼
   ┌───────────────────────┐
   │   RECTIFYING AC POWER  │────── S11
   └───────────┬───────────┘
               │
               ▼
   ┌───────────────────────┐
   │   CONVERTING DC POWER  │────── S12
   └───────────┬───────────┘
               │
               ▼
   ┌───────────────────────┐
   │   CONVERTING AC POWER  │────── S13
   └───────────┬───────────┘
               │
               ▼
   ┌─────────────────────────────┐
   │      DETECTING RELATIVE      │────── S14
   │ LOCATION OF ROTOR AND STATOR │
   └──────────────┬──────────────┘
                  │
                  ▼
   ┌───────────────────────┐
   │  CONTROLLING INVERTER  │────── S15
   └───────────┬───────────┘
               │
               ▼
          ┌─────────┐
          │   END   │
          └─────────┘
```

**European Patent Office**

**EUROPEAN SEARCH REPORT**

Application Number

EP 07 10 7327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/020431 A1 (KIUCHI MITSUYUKI [JP] ET AL) 30 January 2003 (2003-01-30) * paragraph [0057] - paragraph [0063]; figures 1,2 * | 1-14 | INV. H02P6/16 H02P25/02 H02P25/08 H02M5/458 |
| Y | US 5 373 195 A (DE DONCKER RIK W A A [US] ET AL) 13 December 1994 (1994-12-13) * column 3, line 23 - line 54; figure 2 * | 1,12 | |
| A | US 2003/076060 A1 (COLOSKY MARK P [US] ET AL COLOSKY MARK P [US] ET AL) 24 April 2003 (2003-04-24) * paragraph [0034] - paragraph [0038]; figure 1 * | 2,3 | |
| Y | US 2003/034755 A1 (KREFTA RONALD JOHN [US] ET AL) 20 February 2003 (2003-02-20) * abstract * * paragraph [0005] - paragraph [0007]; figure 1 * * paragraph [0017] - paragraph [0018]; figure 2 * | 1-9, 12-14 | |
| Y | US 4 540 925 A (JONES DONALD H [US]) 10 September 1985 (1985-09-10) * column 2, line 34 - line 36 * | 10 | TECHNICAL FIELDS SEARCHED (IPC) H02P H02M |
| Y | US 2004/201358 A1 (KAWAJI MITSUO [JP] ET AL) 14 October 2004 (2004-10-14) * paragraph [0046] - paragraph [0047]; figure 1 * * paragraph [0050]; figures 3,4 * * paragraph [0004] - paragraph [0006]; figures 23,24 * | 11 | |

The present search report has been drawn up for all claims

| Place of search | Date of completion of the search | Examiner |
|---|---|---|
| Munich | 23 August 2007 | Zeng, Wenyan |

EPO FORM 1503 03.82 (P04C01)

## ANNEX TO THE EUROPEAN SEARCH REPORT
## ON EUROPEAN PATENT APPLICATION NO.

EP 07 10 7327

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2007

| Patent document cited in search report | | Publication date | Patent family member(s) | | Publication date |
|---|---|---|---|---|---|
| US 2003020431 | A1 | 30-01-2003 | CN 1399402 A | | 26-02-2003 |
| | | | CN 2579079 Y | | 08-10-2003 |
| | | | KR 20030009217 A | | 29-01-2003 |
| | | | TW 571506 B | | 11-01-2004 |
| US 5373195 | A | 13-12-1994 | BR 9305202 A | | 28-06-1994 |
| | | | CA 2110011 A1 | | 24-06-1994 |
| | | | CH 687946 A5 | | 27-03-1997 |
| | | | IT 1274348 B | | 17-07-1997 |
| | | | JP 3910220 B2 | | 25-04-2007 |
| | | | JP 6276609 A | | 30-09-1994 |
| | | | MX 9308198 A1 | | 31-01-1995 |
| US 2003076060 | A1 | 24-04-2003 | NONE | | |
| US 2003034755 | A1 | 20-02-2003 | US 2004012354 A1 | | 22-01-2004 |
| US 4540925 | A | 10-09-1985 | NONE | | |
| US 2004201358 | A1 | 14-10-2004 | CN 1516918 A | | 28-07-2004 |
| | | | EP 1492223 A1 | | 29-12-2004 |
| | | | WO 03081765 A1 | | 02-10-2003 |

EPO FORM P0459

For more details about this annex : see Official Journal of the European Patent Office, No. 12/82